# EUROPÄISCHE PATENTSCHRIFT

(11) **EP 3 524 733 B1**
(45) Veröffentlichungstag und Bekanntmachung des Hinweises auf die Patenterteilung: **28.08.2024**
(21) Anmeldenummer: 19159580.0
(22) Anmeldetag: 23.02.2010
(51) Int. Cl.: E01C 23/088, B28D 1/18

(54) **AUSWERFER BZW. AUSWERFEREINHEIT FÜR EINE STRASSENFRÄSMASCHINE ODER DERGLEICHEN**
EJECTOR OR EJECTOR UNIT FOR A ROAD MILLER OR THE LIKE
ÉJECTEUR OU UNITÉ D'ÉJECTEUR POUR UNE FRAISEUSE ROUTIÈRE OU ANALOGUE

(30) Priorität: 25.03.2009 DE 102009014730
(43) Veröffentlichungstag der Anmeldung: 14.08.2019
(62) Teilanmeldung aus: 10706596.3
(73) Patentinhaber: Wirtgen GmbH, 53578 Windhagen (DE)
(72) Erfinder: BUHR, Karsten, 56594 Willroth (DE); ABRESCH, Stefan, 56369 Dierdorf (DE); LEHNERT, Thomas, 56587 Oberraden (DE); Hähn, Günter, 53639 Königswinter (DE); BARIMANI, Cyrus, 53639 Königswinter (DE)
(74) Vertreter: Herrmann, Jochen

(56) Entgegenhaltungen:
- DE-C1- 3 708 520
- JP-A- H 083 919
- US-A- 5 101 583
- US-A- 5 315 770

## Beschreibung

Die Erfindung betrifft einen Auswerfer, insbesondere für die Fräswalze einer Straßenfräsmaschine oder eines Surface Miner etc.

Straßenfräsmaschinen weisen üblicher Weise ein Fräsrohr auf, auf dessen Oberfläche eine Vielzahl von Meißelhaltern befestigt sind. Dabei sind die Meißelhalter meist Teil eines Meißelhalterwechselsystems, das auch ein Basisteil umfasst. Das Basisteil ist auf der Oberfläche des Fräsrohrs angeschweißt und nimmt den Meißelhalter auswechselbar auf. Der Meißelhalter dient zur Befestigung eines Meißels, üblicherweise eines Rundschaftmeißels, wie er beispielsweise aus der P 37 01 905 A1 bekannt ist. Die Meißelhalter sind derart auf der Oberfläche des Fräsrohrs angeordnet, dass sich spiralförmige Wendel ergeben. Die Wendel gehen dabei vom Randbereich des Fräsrohrs aus und drehen sich zur Mitte des Fräsrohrs hin.

Damit treffen sich die Wendel, die von den gegenüberliegenden Randbereichen ausgehen, jeweils in der Mitte des Fräsrohrs. In diesem Bereich sind dann auch ein oder mehrere Auswerfer angeordnet. Die Wendeln fördern das von den Meißeln abgetragene Gut zu den Auswerfern. Die transportieren es dann aus dem Wirkungsbereich des Fräsrohrs ab.

Aus JPH083919A1 ist ein Auswerfer für eine Straßenfräsmaschine bekannt.

Die Auswerfer unterliegen einem starken Verschleißangriff und müssen daher regelmäßig überprüft und ausgewechselt werden. Hierzu muss der auf dem Fräsrohr angeschweißte Auswerfer abgetrennt und ein neuer aufgeschweißt werden. Dabei ist auf die exakte Positionierung und Ausrichtung des Auswerfers zu achten, um eine ideale Ausförderleistung zu erreichen. Diese Tauscharbeit ist im beengten Arbeitsbereich des Fräsrohrs mühsam.

Es ist Aufgabe der Erfindung, einen verbesserten Auswerfer bereitzustellen, der eine einfache Maschinenwartung ermöglicht.

Diese Aufgabe wird mit einem Auswerfer nach Anspruch 1 gelöst. Der Auswerfer weist eine seiner Förderfläche abgewandte Befestigungsseite mit einer Stützfläche auf. Mit dieser Befestigungsseite kann der Auswerfer an ein am Fräsrohr befestigtes Bauteil, beispielsweise ein dort angeschweißtes Tragteil angesetzt werden. Über die Stützfläche des Tragteils lassen sich die im Werkzeugeinsatz anstehenden Belastungen zumindest teilweise sicher abtragen. Der Auswerfer ist mit einer Befestigungsaufnahme bzw. einem Befestigungsansatz versehen, so dass er auswechselbar befestigbar ist. Auf diese Weise kann er im Schadens- oder Verschleißfall einfach gewechselt werden.

Erfindungsgemäß ist die Förderfläche des Auswerfers quer zur Vorschubrichtung der Auswerfereinheit angeordnet und zumindest bereichsweise gemuldet, ausgebildet. Die Förderfläche des Auswerfers ist vorzugsweise konkav ausgebildet oder sich im gemuldeten Bereich aus Linear- und/oder Bogenabschnitten zusammengesetzt.

Die gemuldete Formgebung ermöglicht eine schaufelartige Geometrie, die die Ausförderrate verbessert.

Wenn vorgesehen ist, dass in die Förderfläche eine oder mehrere Vertiefungen eingebracht sind, dann kann sich während des Werkzeugeinsatzes abgetragenes Gut in den Vertiefungen ablagern. Es bildet dort eine "natürliche" Verschleißschutzschicht.

Gemäß einer Erfindungsvariante kann es vorgesehen sein, dass als Befestigungsaufnahme wenigstens eine Schraubaufnahme verwendet ist, dass die Schraubaufnahme der Frontseite des Auswerfers zugekehrt in eine Schraubenkopfaufnahme ausläuft, in der ein Schraubenkopf einer Befestigungsschraube zumindest bereichsweise unverdrehbar aufnehmbar ist. Mit den Schraubverbindungen ist ein schneller und problemloser Auswerfertausch möglich. Die versenkte oder teilversenkte Aufnahme des Schraubenkopfs verhindert einen abrasiven Angriff am versenkten Kopfbereich. Darüber hinaus wird ein Lösen der Schraube hier verhindert.

Um den Auswerfer zuverlässig an einem Tragteil abstützen zu können, kann es vorgesehen sein, dass auf der der Förderfläche abgewandten Seite wenigstens ein abstehender Fixieransatz oder eine eingetiefte Fixieraufnahme angeordnet ist. Anstehende Querkräfte können dann insbesondere formschlüssig vom Auswerfer in das Tragteil übertragen werden. Dies wird insbesondere dann möglich, wenn vorgesehen ist, dass mittels dem wenigstens einen Fixieransatz oder der wenigstens einen Fixieraufnahme formschlüssig eine Verschiebung des Auswerfers in einer Ebene quer zur Vorschubrichtung begrenzbar ist.

Wenn die Gestaltung des Auswerfers derart ist, dass auf der der Förderfläche abgewandten Rückseite eine oder mehrere angeformte Versteifungsrippen angeordnet sind, dann kann mit geringem Materialaufwand ein ausreichend steifer Auswerfer konstruiert werden.

Erfindungsgemäß kann es vorgesehen sein, dass die Schraubaufnahme durch den Fixieransatz oder die Fixieraufnahme hindurchgeführt ist. Dann wird das Stützteil für eine ausreichende Klemmlänge der Befestigungsschraube ausgenutzt.

Eine bevorzugte Erfindungsausgestaltung ist derart, dass die Befestigungsseite derart ausgebildet ist, dass der Auswerfer in verschiedenen Betriebsstellungen montierbar ist. Der Auswerfer kann insbesondere spiegelsymmetrisch ausgebildet oder im Bereich einer Befestigungsseite derart ausgebildet sein, dass er eine Montage auf Umschlag in zwei verschiedenen Betriebsstellungen ermöglicht. Denkbar ist auch ein Auswerfer, der drei oder vier unterschiedliche Betriebsstellungen ermöglicht.

Hierbei macht man sich die Erkenntnis zugrunde, dass der Auswerfer im Wesentlichen an seinem dem Fräsrohr abgewandten Bereich verschleißt. Ist der Verschleißzustand dort erreicht, wird der Auswerfer demontiert und um beispielsweise 180° verdreht wieder angebaut.

Eine bevorzugte Erfindungsausgestaltung ist derart, dass die Befestigungsseite einen konvexen oder balligen oder sphärischen Befestigungsabschnitt zur Anlage an einem konkaven oder gemuldeten Aufnahmeabschnitt eines Trägers aufweist. Diese Verbindung schafft eine große Verbindungsfläche, die auch bei unsymmetrischer Belastung der Förderfläche für eine gute Kraftabtragung sorgt. Eine weitere Verbesserung der Standzeit wird dadurch erreicht, dass im Bereich der Förderfläche wenigstens ein Verschleißschutzelement angeordnet ist, das aus einem verschleißfesteren Material als die Förderfläche besteht. Hierbei kann es insbesondere vorgesehen sein, dass das Verschleißschutzelement aus einem Hartwerkstoffelement, beispielsweise Hartmetall oder Keramik, oder einer aufgebrachten Beschichtung, beispielsweise einer Auftragsschweißung, gebildet ist.

Die Erfindung wird im Folgenden anhand von in den Zeichnungen dargestellten Ausführungsbeispielen näher erläutert. Es zeigen:
- Figur 1: eine Fräswalze einer Straßenfräsmaschine in Frontansicht,
- Figur 2: die Fräswalze gemäß Figur 1 in Seitenansicht,
- Figur 3: die Ansicht gemäß Figur 2 vergrößert und in leicht veränderter Dar stellung,
- Figur 4: eine Auswerfereinheit in perspektivischer Frontansicht,
- Figur 5: die Auswerfereinheit gemäß Figur 4 in perspektivischer Rückansicht,
- Figur 6: einen Träger der Auswerfereinheit gemäß Figur 5 in perspektivischer Rückansicht,
- Figur 7: den Träger gemäß Figur 6 in perspektivischer Ansicht,
- Figur 8: einen Auswerfer der Auswerfereinheit gemäß Figur 6 in perspektivi scher Frontansicht,
- Figur 9: den Träger gemäß Figur 8 in perspektivischer Rückansicht,
- Figur 10: in perspektivischer Rückansicht eine zweite Ausgestaltung einer Auswerfereinheit mit einem Auswerfer und einem Träger und
- Figur 11: die Anordnung gemäß Figur 10 in perspektivischer Frontansicht.

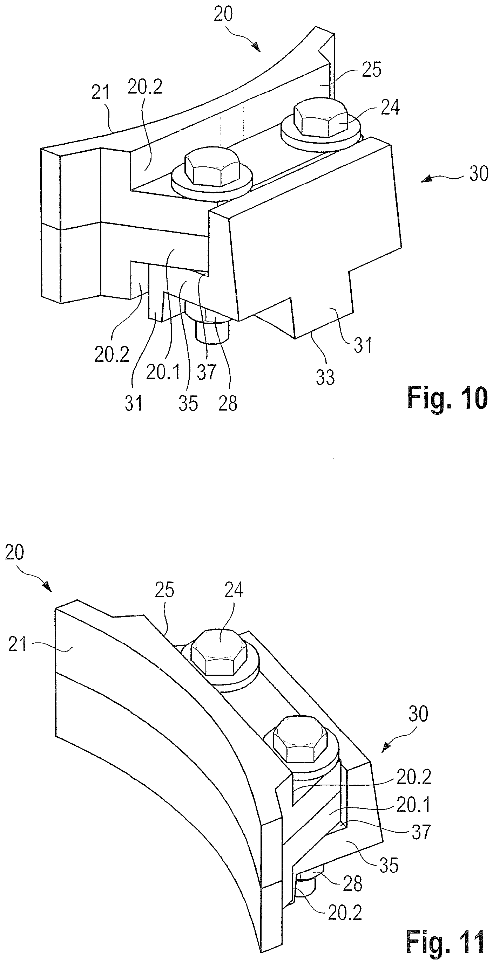

- Figur 11: die Anordnung gemäß Figur 10 in perspektivischer Frontansicht.

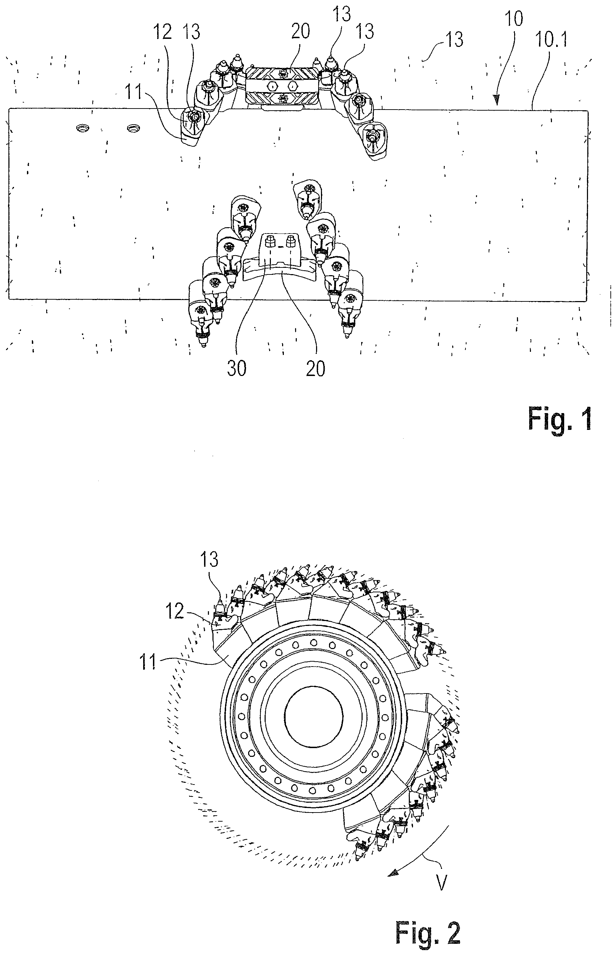

Figur 1 zeigt eine Fräswalze mit einem zylindrischen Fräsrohr 10, auf dessen Walzenoberfläche 10.1 eine Vielzahl von Basisteilen 11 von Meißelhalterwechselsystemen aufgeschweißt sind. Die Basisteile 11 tragen auswechselbare Meißelhalter 12. In den Meißelhaltern 12 ist jeweils ein Meißel 13, nämlich ein Rundschaftmeißel auswechselbar aufgenommen. Die Basisteile 11 sind einander so zugeordnet, dass sie eine Wendel, nämlich eine Transportwendel bilden. Dabei dreht sich die Wendel, ausgehend von der Seite des Fräsrohrs 10 auf der Walzenoberfläche 10.1 in Richtung auf die zwischen den beiden Seiten gebildete Fräsrohrmitte. In den Figuren 1 und 2 sind zur besseren Übersichtlichkeit nur ein Teil der Meißelhalterwechsel-Systeme dargestellt. Von den nicht gezeigten Meißelhalterwechsel-Systemen sind ersatzweise strichlierte Linien gezeigt, die die Mittellängsachse der Meißel 13 repräsentieren. Wie diese Linien erkennen lassen, stehen beidseitig der Fräsrohrmitte jeweils mehrere Transportwendel.

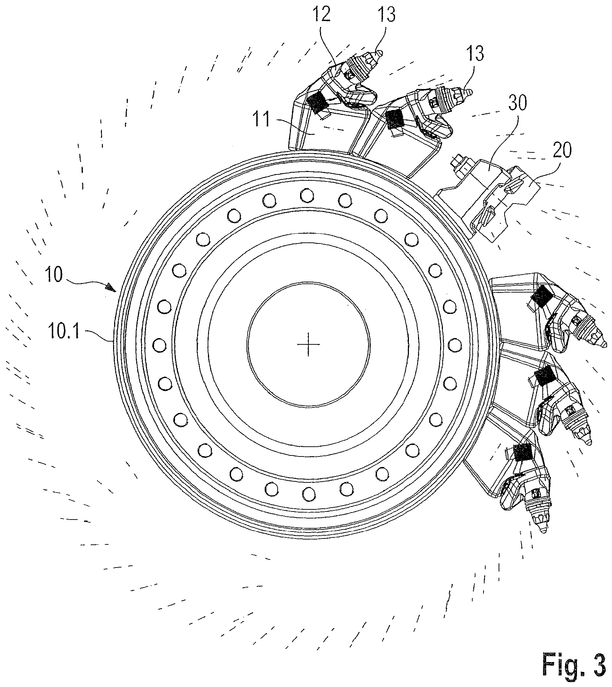

Die Transportwendel treffen sich paarweise im Bereich der Fräsrohrmitte. Wie die Figur 1 erkennen lässt, ist dort jeweils mindestens eine Auswerfereinheit angeordnet. In der Figur 3 sind gegenüber der Darstellung gemäß Figur 2 die Meißelhalterwechsel-Systeme nicht gezeigt, die den Blick auf die Auswerfereinheit verstellen. Wie diese Darstellung erkennen lässt, wird die Auswerfereinheit von einem Tragteil 30 und einem Auswerfer 20 gebildet.

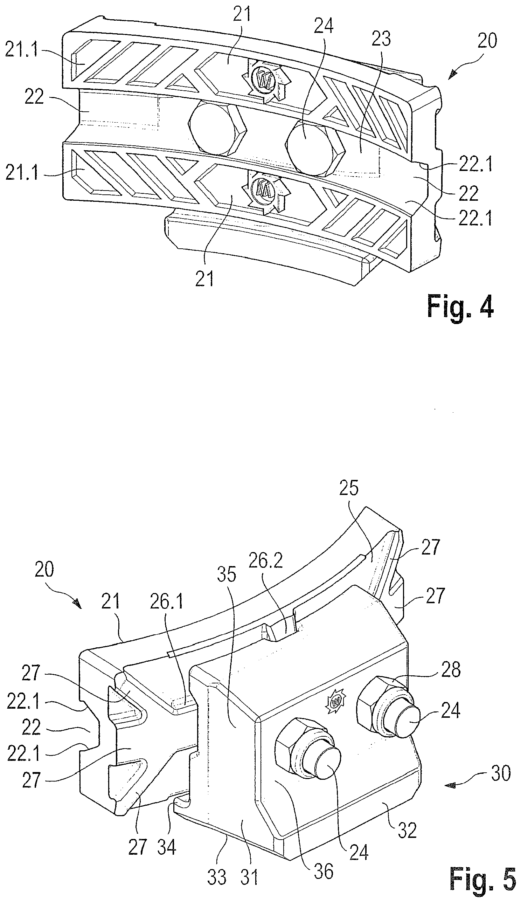

In den Figuren 4 und 5 ist die Auswerfereinheit in Alleindarstellung gezeigt.

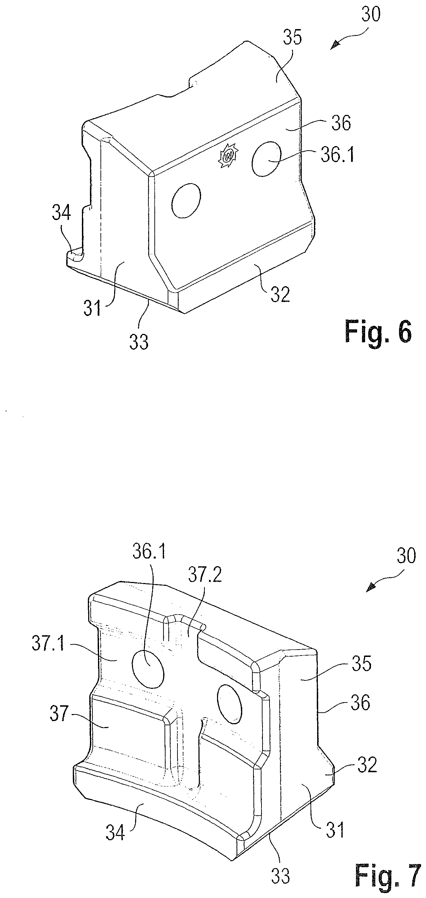

Unter Bezugnahme auf Figuren 6 und 7 wird zunächst die Konstruktion des Tragteils 30 erläutert. Es weist einen Befestigungsfuß 31 auf, der an seiner Unterseite eine Befestigungsfläche 33 bildet. Mit dieser kann das Tragteil 30 auf die Walzenoberfläche 10.1 aufgesetzt und seitlich verschweißt werden. An den Befestigungsfuß 31 ist nach oben abstehend ein Stützteil 35 angeformt, der eine Rückseite 36 bildet. Der Befestigungsfuß 31 ist mittels eines Ansatzes 32 über die Rückseite 36 verbreitert, so dass er eine breite Befestigungsfläche 33 mit großem Stützabstand bildet. Darüber hinaus bringt die durch den Ansatz 32 bewirkte Querschnittsverbreiterung eine Verstärkung des hoch belasteten Übergangsbereiches zwischen Befestigungsfuß 31 und Stützteil 35. Eine weitere Verbreiterung der Befestigungsfläche 33 wird mit einem frontseitigen Vorsprung 34 erreicht, der sich ebenso wie der Ansatz 32 über die gesamte Breite des Tragteils 30 erstreckt. Das Tragteil 30 weist frontseitig eine Stützfläche 37 auf, die sich über die Vorderseite des Stützteils 35 und auch über einen Teil des Befestigungsfußes 31 erstreckt. Diese Ausbildung der Stützfläche 37 ermöglicht eine festigkeitsoptimierte Abstützung des Auswerfers 20. In die Stützfläche 37 sind zwei Aufnahmen 37.1, 37.2 eingearbeitet. Die beiden Aufnahmen 37.1, 37.2 sind so in die Stützfläche 37 eingetieft, dass sie trogartige Mulden bilden.

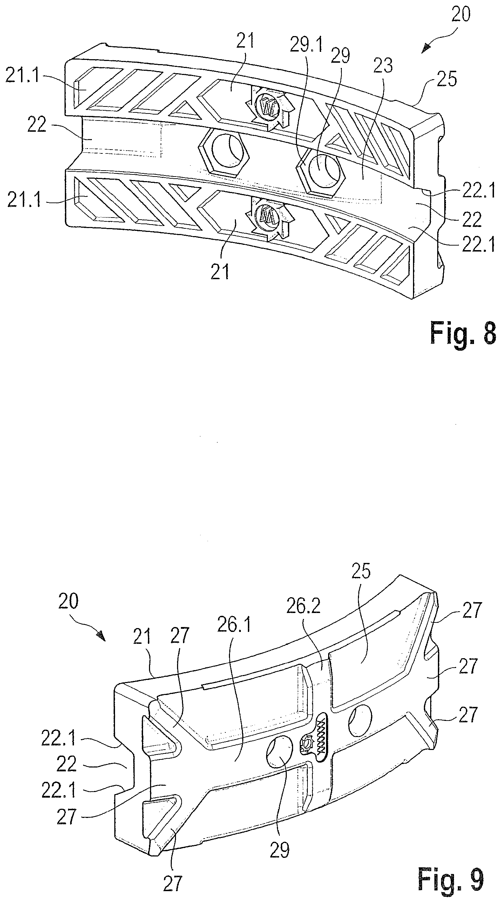

Mit Bezug auf die Figuren 8 und 9 wird nachfolgend der Auswerfer 20 erläutert. Es ist plattenförmig als Gesenk-Schmiedeteil ausgebildet und daher besonders steif. Der Auswerfer 20 weist eine frontseitige Förderfläche 21 auf.

Diese ist mit Eintiefungen 21.1, 22 versehen. Zwischen den Eintiefungen 21.1 stehen Rippen, die im Winkel zur Senkrechten stehen und somit in Richtung zur Auswerfermitte geneigt sind. Die Eintiefungen nehmen während des Betriebseinsatzes Abraummaterial auf, so dass sich ein "natürlicher" Verschleißschutz bildet. Eine besonders gute Förderrate wird zudem dadurch erreicht, dass die Förderfläche 21 konkav und damit schaufelartig ausgebildet ist. Die Eintiefung 22 weist zwei Schrägflächen 22.1 auf, die im Winkel zu der Förderfläche 21 stehen und die Förderwirkung unterstützen.

Zwischen den beiden Eintiefungen 22 steht ein verdickter Ansatz 23, der zwei als Durchgangsbohrungen ausgebildete Schraubaufnahmen 29 aufnimmt. Die Schraubaufnahmen 29 laufen frontseitig in sechseckige Schraubenkopfaufnahmen 29.1 aus.

Die Figur 9 zeigt die Rückseite des Auswerfers 20. Wie diese Darstellung erkennen lässt, stehen rückseitig rippenartige Fixieransätze 26.1, 26.2 vom Auswerfer 20 vor. Die Fixieransätze 26.1, 26.2 sind in ihrer Anordnung und Dimensionierung auf die Anordnung und Form der Aufnahmen 37.1, 37.2 des Trägers 30 angepasst. Die Schraubaufnahmen 29 sind durch den Fixieransatz 26.1 hindurchgeführt.

Wie Figur 9 weiter erkennen lässt, sind in den rückseitigen Eckbereichen des Auswerfers 20 Versteifungsrippen 27 angeordnet. Diese sind an den horizontalen Fixieransatz 26 angeschlossen, so dass sich eine optimale Kraftableitung ergibt.

Zur Befestigung des Auswerfers 20 wird dieser mit seiner Rückseite an die Stützfläche 37 des Trägers 30 angesetzt. Dabei greifen dann die Fixieransätze 26.1, 26.2 in die korrespondierenden Aufnahmen 37.1, 37.2 ein. Auf diese Weise ergibt sich eine kreuzweise Verzahnung, die eine Verschiebung des Auswerfers 20 gegenüber dem Träger 30 in Achs- und Radialrichtung des Fräsrohrs 10 verhindert.

Über diese verzahnte Verbindung können große Teile der während des Werkzeugeinsatzes entstehenden Kräfte abgeleitet werden.

Die Schraubaufnahmen 29, 36.1 des Auswerfers 20 und des Trägers 30 stehen in Flucht, so dass Befestigungsschrauben 24 (siehe Figuren 4 und 5) durch sie hindurchgesteckt werden können. Der Schraubenkopf der Befestigungsschrauben 24 findet in der Schraubenkopfaufnahme 29.1 Platz, wo er unverdrehbar gehalten wird. Auf die Befestigungsschrauben 24 können, vorzugsweise selbst sichernde Muttern 28 aufgeschraubt und somit der Auswerfer 20 am Träger 30 fixiert werden.

Während des Werkzeugeinsatzes verschleißt vornehmlich der radial außenstehende Bereich des Auswerfers 20. Der Auswerfer 20 ist, wie die Figuren 8 und 9 erkennen lassen, symmetrisch zur Mittelquerebene ausgebildet. Bei Erreichen der Verschleißgrenze kann er daher abgebaut und um 180° gedreht wieder angebaut werden.

Figuren 10 und 11 zeigen eine weitere Ausgestaltungsvariante einer erfindungsgemäßen Auswerfereinheit. Diese umfasst wieder einen Auswerfer 20 und einen Träger 30. Der Auswerfer 20 besitzt wieder eine gemuldete Förderfläche 21, die in Bearbeitungsrichtung gewandt ist, wobei die Muldung konkav in Richtung entgegen der Bearbeitungsrichtung eingetieft ist. Der Förderfläche 21 abgewandt weist der Auswerfer 20 an seiner rückwärtigen Befestigungsseite 25 einen Befestigungsansatz 20.1 auf. Dieser steht blockartig entgegengesetzt der Bearbeitungsrichtung ab. Er besitzt zwei Schraubaufnahmen, die fluchtend zu Schraubaufnahmen des Trägers 30 angeordnet werden können.

Durch die Schraubaufnahmen lassen sich Befestigungsschrauben 24 hindurchführen und auf deren Schraubbolzen endseitig Muttern 28 aufdrehen. Damit wird der Auswerfer 20 fest mit einer Stützfläche 37 des Trägers 30 verklemmt, insbesondere verspannt. Wie die Zeichnungen erkennen lassen, ist der Auswerfer 20 im Bereich der Befestigungsseite 25 mit Ausnehmungen 20.2 versehen. Die obere Ausnehmung 20.2 nimmt die Köpfe der Befestigungsschrauben 24 auf und schützt sie so hinter der Förderfläche 21 vor dem abrassiven Angriff des abgetragenen Materials. Die untere Ausnehmung 20.2 zieht sich schürzenartig über den Träger 30 und schützt diesen hier. Der Auswerfer 20 ist zur Mittelquerachse symmetrisch und kann daher um 180° gedreht auf Umschlag in zwei Betriebsstellungen an dem Träger 30 befestigt werden.

## Patentansprüche

1. Auswerfer (20), für Straßenfräsmaschinen, aufweisend:
- eine in Vorschubrichtung (V) gerichtete Förderfläche (21);
- eine der Förderfläche (21) abgewandte Rückseite, wobei die Rückseite eine Befestigungsseite (25) mit wenigstens einer Stützfläche bildet;
- eine Befestigungsaufnahme, insbesondere Schraubaufnahme und/oder einen Befestigungsansatz,
**dadurch gekennzeichnet,**
**dass** die Förderfläche (21) des Auswerfers (20) im Wesentlichen quer zur Werkzeugvorschubrichtung (V) angeordnet ist und zumindest bereichsweise in Richtung entgegen der Werkzeugvorschubrichtung (V) gemuldet ausgebildet ist.

2. Auswerfer nach Anspruch 1,
**dadurch gekennzeichnet,**
**dass** die Förderfläche (21) des Auswerfers (20) schaufelartig eingetieft ausgebildet ist.

3. Auswerfer nach Anspruch 2,
**dadurch gekennzeichnet,**
**dass** die Förderfläche (21) zumindest bereichsweise konkav ausgebildet ist oder sie sich im gemuldeten Bereich aus Linear und/oder Bogenabschnitten zusammensetzt.

4. Auswerfer nach einem der Ansprüche 1 bis 3,
**dadurch gekennzeichnet,**
**dass** in die Förderfläche (21) eine oder mehrere Vertiefungen (21.1, 22) eingebracht sind.

5. Auswerfer nach einem der Ansprüche 1 bis 4
**dadurch gekennzeichnet,**
**dass** als Befestigungsaufnahme wenigstens eine Schraubaufnahme (29) verwendet ist,
**dass** die Schraubaufnahme (29) der Frontseite des Auswerfers (20) zugekehrt in eine Schraubenkopfaufnahme (29.1) ausläuft, in der ein Schraubenkopf einer Befestigungsschraube (24) zumindest bereichsweise unverdrehbar aufnehmbar ist.

6. Auswerfer nach einem der Ansprüche 1 bis 5,
**dadurch gekennzeichnet,**
**dass** auf der der Förderfläche (21) abgewandten Seite wenigstens ein abstehender Fixieransatz (26.1, 26.2) oder eine eingetiefte Fixieraufnahme angeordnet ist.

7. Auswerfer nach Anspruch 6,
**dadurch gekennzeichnet,**
**dass** mittels dem wenigstens einen Fixieransatz (26.1, 26.2) oder der wenigstens einen Fixieraufnahme (29) formschlüssig eine Verschiebung des Auswerfers in einer Ebene quer zur Vorschubrichtung (V) begrenzbar ist.

8. Auswerfer nach einem der Ansprüche 1 bis 7,
**dadurch gekennzeichnet,**
**dass** auf der der Förderfläche (21) abgewandten Rückseite eine oder mehrere angeformte Versteifungsrippen (27) angeordnet sind.

9. Auswerfer nach einem der Ansprüche 6 bis 8,
**dadurch gekennzeichnet,**
**dass** die Schraubaufnahme (29) durch den Fixieransatz (26.2) oder die Fixieraufnahme hindurchführt.

10. Auswerfer nach einem der Ansprüche 1 bis 9,
**dadurch gekennzeichnet,**
**dass** die Befestigungsseite (25) derart ausgebildet ist, dass der Auswerfer in verschiedenen Betriebsstellungen, vorzugsweise auf Umschlag, montierbar ist.

11. Auswerfer nach einem der Ansprüche 1 bis 10,
**dadurch gekennzeichnet,**
**dass** der Fixieransatz (26.2) oder die Fixieraufnahme spiegelsymmetrisch ausgebildet ist.

12. Auswerfer nach einem der Ansprüche 1 bis 11,
**dadurch gekennzeichnet,**
**dass** die Befestigungsseite (25) einen konvexen oder balligen, beispielsweise sphärischen, Befestigungsabschnitt zur Anlage an einem konkaven oder gemuldeten Aufnahmeabschnitt eines Trägers (30) aufweist.

13. Auswerfer nach einem der Ansprüche 1 bis 12,
**dadurch gekennzeichnet,**
**dass** im Bereich der Förderfläche (21) wenigstens ein Verschleißschutzelement angeordnet ist, das aus einem verschleißfesteren Material als die Förderfläche (21) besteht.

14. Auswerfer nach einem der Ansprüche 1 bis 13,
**dadurch gekennzeichnet,**
**dass** das Verschleißschutzelement aus einem Hartwerkstoffelement oder einer aufgebrachten Beschichtung, insbesondere einer Auftragsschweißung gebildet ist.

## Claims

1. An ejector (20) for road milling machines, comprising:
- a conveying surface (21) directed in a feed direction (V);
- a rear side facing away from the conveying surface (21), the rear side forming a mounting side (25) having at least one support surface;
- a mounting receptacle, in particular a screw receptacle and/or a mounting extension
**characterized**
**in that** the conveying surface (21) of the ejector (20) is arranged substantially transversely to the tool feed direction (V) and is at least locally hollowed in a direction opposite to the tool feed direction (V).

2. The ejector according to Claim 1, wherein
the conveying surface (21) of the ejector (20) is embodied in recessed fashion in scoop-like fashion.

3. The ejector according to Claim 1, wherein
the conveying surface (21) is at least locally embodied in concave fashion or is assembled, in the hollowed region, from line segments and/or curve segments.

4. The ejector according to one of Claims 1 to 3, wherein
one or more depressions (21.1, 22) are introduced into the conveying surface (21).

5. The ejector according to one of Claims 1 to 4, wherein
at least one screw receptacle (29) is used as a mounting receptacle; and
the screw receptacle (29) opens, toward the front side of the ejector (20), into a screw head receptacle (29.1) in which a screw head of a mounting screw (24) is at least locally nonrotatably receivable.

6. The ejector according to one of Claims 1 to 5, wherein
at least one protruding securing extension (26.1, 26.2), or a recessed securing receptacle, is arranged on the side facing away from the conveying surface (21).

7. The ejector according to Claim 6, wherein
by means of the at least one securing extension (26.1, 26.2) or the at least one securing receptacle (29), any displacement of the ejector in a plane transverse to the feed direction (V) can be limited in positively engaged fashion.

8. The ejector according to one of Claims 1 to 7, wherein
one or more shaped-on stiffening ribs (27) are arranged on the rear side facing away from the conveying surface (21).

9. The ejector according to one of Claims 6 to 8, wherein
the screw receptacle (29) is guided through the securing extension (26.2) or securing receptacle.

10. The ejector according to one of Claims 1 to 9,
wherein the mounting side (25) is embodied in such a way that the ejector is installable in different operating positions, preferably reversibly.

11. The ejector according to one of Claims 1 to 10, wherein
the securing extension (26.2) or securing receptacle is embodied in mirror-symmetrical fashion.

12. The ejector according to one of Claims 1 to 11, wherein
the mounting side (25) comprises a convex or crowned, for example spherical, mounting portion for contact against a concave or hollowed receiving portion of a carrier (30).

13. The ejector according to one of Claims 1 to 12, wherein
at least one wear protection element, made of a material more wear-resistant than the conveying surface (21), is arranged in the region of the conveying surface (21).

14. The ejector according to one of Claims 1 to 13, wherein
the wear protection element is constituted by a hard-material element or by an applied coating, particular a hardfacing.

## Revendications

1. Éjecteur (20), pour fraiseuses routières, comprenant :
- une surface de transport (21) orientée dans la direction d'avancement (V) ;
- une face arrière opposée à la surface de transport (21), la face arrière formant une face de fixation (25) avec au moins une surface d'appui ;
- un logement de fixation, en particulier un logement de vis et/ou une appendice de fixation,
**caractérisé**
**en ce que** la surface de transport (21) de l'éjecteur (20) est disposée essentiellement transversalement à la direction d'avance de l'outil (V) et est réalisée en forme de creux au moins par zones dans la direction opposée à la direction d'avance de l'outil (V).

2. Éjecteur selon la revendication 1,
**caractérisé**
**en ce que** la surface de transport (21) de l'éjecteur (20) est réalisée creuse à la manière d'une pelle.

3. Éjecteur selon la revendication 2,
**caractérisé**
**en ce que** la surface de transport (21) est concave au moins par zones ou qu'elle se compose, dans la zone en forme de creux, de segments linéaires et/ou de segments arqués.

4. Éjecteur selon l'une des revendications 1 à 3,
**caractérisé**
**en ce qu'**une ou plusieurs cavités (21.1, 22) sont ménagées dans la surface de transport (21).

5. Éjecteur selon l'une des revendications 1 à 4,
**caractérisé**
**en ce qu'**au moins un logement de vis (29) est utilisé comme logement de fixation, **en ce que** le logement de vis (29) se termine, en étant tourné vers la face avant de l'éjecteur (20), par un logement de tête de vis (29.1) dans lequel une tête de vis d'une vis de fixation (24) peut être reçue sans pouvoir tourner, au moins par zones.

6. Éjecteur selon l'une des revendications 1 à 5,
**caractérisé**
**en ce que** sur le côté opposé à la surface de transport (21) est disposé au moins un appendice de fixation (26.1, 26.2) en saillie ou un logement de fixation creux.

7. Éjecteur selon la revendication 6,
**caractérisé**
**en ce qu'**au moyen de l'appendice de fixation (26.1, 26.2) au moins présent ou du logement de fixation (29) au moins présent, un déplacement de l'éjecteur dans un plan transversal à la direction d'avance (V) peut être limité par complémentarité de forme.

8. Éjecteur selon l'une des revendications 1 à 7,
**caractérisé**
**en ce qu'**une ou plusieurs nervures de rigidification (27) moulées sont disposées sur la face arrière opposée à la surface de transport (21).

9. Éjecteur selon l'une des revendications 6 à 8,
**caractérisé**
**en ce que** l'appendice de vis (29) traverse l'appendice de fixation (26.2) ou le logement de fixation.

10. Éjecteur selon l'une des revendications 1 à 9,
**caractérisé**
**en ce que** la face de fixation (25) est configurée de telle sorte que l'éjecteur peut être monté dans différentes positions de fonctionnement, de préférence en retournement.

11. Éjecteur selon l'une des revendications 1 à 10,
**caractérisé**
**en ce que** l'appendice de fixation (26.2) ou le logement de fixation est réalisé avec une symétrie spéculaire.

12. Éjecteur selon l'une des revendications 1 à 11,
**caractérisé**
**en ce que** la face de fixation (25) présente une portion de fixation convexe ou bombée, par exemple sphérique, destinée à venir en appui sur une portion de réception concave ou en forme de creux d'un support (30).

13. Éjecteur selon l'une des revendications 1 à 12,
**caractérisé**
**en ce qu'**au moins un élément de protection contre l'usure est disposé au niveau de la surface de transport (21), cet élément étant réalisé dans un matériau plus résistant à l'usure que la surface de transport (21).

14. Éjecteur selon l'une des revendications 1 à 13,
**caractérisé**
**en ce que** l'élément de protection contre l'usure est formé d'un élément en matériau dur ou d'un revêtement appliqué, notamment d'un rechargement par soudage.
